# EUROPEAN PATENT APPLICATION

(11) **EP 2 166 401 A1**
(43) Date of publication of application: **24.03.2010**
(21) Application number: 09169997.5
(22) Date of filing: 10.09.2009
(51) Int. Cl.: G02B 27/01, G02B 27/00, G02B 27/64

(54) **Head up display**

(30) Priority: 18.09.2008 JP 2008239980
(71) Applicant: Kabushiki Kaisha Toshiba, Tokyo 105-8001 (JP)
(72) Inventor: Nagahara, Osamu, Tokyo 105-8001 (JP); Matsubayashi, Toshiaki, Tokyo 105-8001 (JP); Hagiwara, Tsuyoshi, Tokyo 105-8001 (JP); Ogawa, Masatoshi, Tokyo 105-8001 (JP); Horiuchi, Kazuo, Tokyo 105-8001 (JP); Hotta, Aira, Tokyo 105-8001 (JP); Sasaki, Takashi, Tokyo 105-8001 (JP); Okumura, Haruhiko, Tokyo 105-8001 (JP); Katagiri, Takato, Tokyo 105-8001 (JP)
(74) Representative: Henkel, Feiler & Hänzel

(57) **Abstract**

A head up display according to an embodiment of the present invention can improve visibility by changing a position of information projected onto a combiner (11) based on information captured by a front camera (3) and a driver camera (5).

## Description

The present invention relates to a head up display that is mounted in a vehicle that travels based on driving by a driver and can inform about, e.g., a traveling speed or a situation of the vehicle without requesting the driver to change his/her line of sight.

A long time has passed since a driving support apparatus called a head up display (HUD) that displays information required for driving on a driver's line of sight was put to practical use in, e.g., a vehicle that travels based on driving by the driver.

Using the head up display (HUD) enables the driver to acquire (visually confirm) information required for traveling, e.g., a speed or navigation without changing his/her line of sight leading to a far front side to a near side.

It is to be noted that not only a function of informing a speed or a vehicle state but also a navigation function, a function of giving many types of driving support information called a night view or a night vision, and others have been extensively put to practical use nowadays.

On the other hand, as a result of making the navigation function, the night view, or the night vision function in the HUD satisfactory, a picture projected onto a combiner on a windshield becomes complicated, and a new problem, e.g., a double image involved by a driver's binocular observation or occurrence of discomfort in perspective is reported.

Therefore, a monocular HUD having an ingenious projected picture so that a picture can be placed on a line of sight of one eye alone has been proposed while considering a binocular disparity of a driver (a human).

However, a picture projected in the monocular HUD must be placed on a line of sight of one eye alone while considering a human binocular disparity and is apt to deviate from the line of sight of one eye due to a factor, e.g., vibration of a vehicle or a change in posture of a driver, and it cannot be said that visibility is necessarily good.

Japanese Patent Application Publication (KOKAI) No. 2006-142897 discloses correcting a position of a picture displayed in an HUD in accordance with a measured valued of a position of a driver's eye ball and information, e.g., a distance to an object outside a vehicle.

However, even the method disclosed in the Publication cannot sufficiently place a picture projected in the monocular HUD onto a line of sight of one eye alone by absorbing vibration of a vehicle or a change in posture of a driver.

That is, in the monocular HUD, a secure countermeasure for a change in visibility of a picture due to vibration of a vehicle or a change in posture of a driver is not realized at the present moment.

An object of the present invention to provide a head up display (HUD) with high visibility that reduces deviation of a projection position of a picture projected in a monocular HUD from a line of sight of one eye (a single eye) due to vibration of a vehicle or a change in posture of a driver.

According to an aspect of the invention, there is provided a head up display characterized by comprising:
a display information generating module (32) which generates information to be projected; a combiner (11) which guides the information to be displayed that is generated by the display information generating module to a predetermined position; a detecting module (3) which detects a factor of a fluctuation of a position of a picture that is generated by the display information generating module and projected onto the combiner; a movement amount detecting module (63) which detects an amount of the fluctuation of the position of the picture projected onto the combiner that is detected by the detecting module; and a projection position correcting module (61) which changes a position at which the picture from the display information generating module is projected onto the combiner based on the amount of the fluctuation obtained by the movement amount detecting module.

The invention can be more fully understood from the following detailed description when taken in conjunction with the accompanying drawings, in which:
FIG. 1 is an exemplary diagram showing an example of an in-vehicle head up display (HUD) according to an embodiment of the invention to which an example of an embodiment of the present invention can be applied;
FIG. 2 is an exemplary diagram showing an example of another embodiment of an in-vehicle head up display (HUD) shown in FIG. 1, according to an embodiment of the invention;
FIG. 3 is an exemplary diagram showing an example of a position of a camera that acquires information used for correction of display information of the HUD shown in FIGS. 1 and 2 according to an embodiment of the invention;
FIGS. 4A to 4C are exemplary diagrams each showing an example of a concept of correcting a display position of display information projected onto a combiner of a windshield of the HUD shown in FIGS. 1 and 2 according to an embodiment of the invention;
FIG. 5 is an exemplary diagram showing an example of a relationship between the HUD and a driver's line of sight according to an embodiment of the invention;
FIGS. 6A and 6B are exemplary diagrams each showing an example of a relationship between display information displayed by the HUD shown in FIGS. 1 and 2 and a relative position of the driver in a vehicle according to an embodiment of the invention;
FIGS. 7A to 7C are exemplary diagrams each showing an example of a principle of a method of correcting display information displayed by the HUD in relation to a relative position of the driver in the vehicle according to an embodiment of the invention;
FIGS. 8A and 8B are exemplary diagrams each showing an example of a method of correcting display information displayed by the HUD in relation to a relative position of the driver in the vehicle according to an embodiment of the invention;
FIG. 9 is an exemplary diagram showing an example of an element that corrects a display position of display information projected onto the combiner of the windshield of the HUD shown in FIGS. 1 and 2 according to an embodiment of the invention;
FIG. 10 is an exemplary diagram showing an example of a still another embodiment of the in-vehicle head up display (HUD) shown in FIGS. 1 and 2, according to an embodiment of the invention; and
FIGS. 11A to 11C are exemplary diagrams each showing an example of a display information correcting method of the HUD shown in FIG. 10 according to an embodiment of the invention.

Embodiments of the invention will be explained in detail hereinafter with reference to the accompanying drawings. The various modules of the systems described herein can be implemented as software applications, hardware and/or software modules, or components on one or more computers, such as servers. While the various modules are illustrated separately, they may share some or all of the same underlying logic or code.

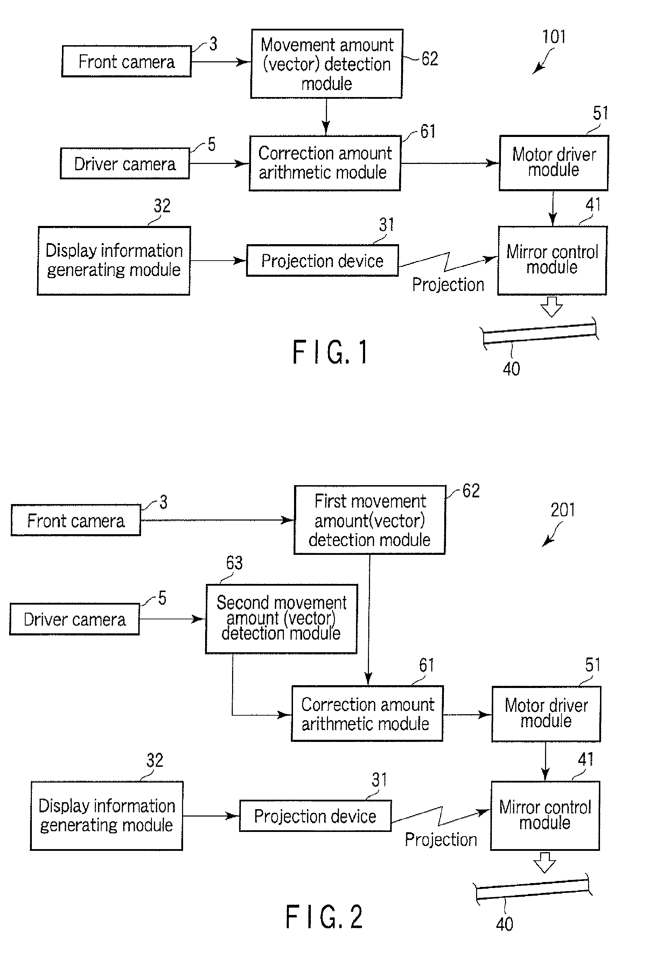

FIG. 1 shows an outline of an in-vehicle head up display (which is a driving support apparatus and will be referred to as an HUD hereinafter) to which an embodiment of the present invention can be applied.

An HUD 101 generally includes a projection device 31 that projects a picture (display information) as a display target onto a combiner provided at a predetermined position on the windshield of a vehicle, and a mirror 40 that guides a picture from the projection device 31 to the combiner. It is to be noted that the combiner is called the HUD in some cases but all structures will be generically explained as the HUD in this embodiment.

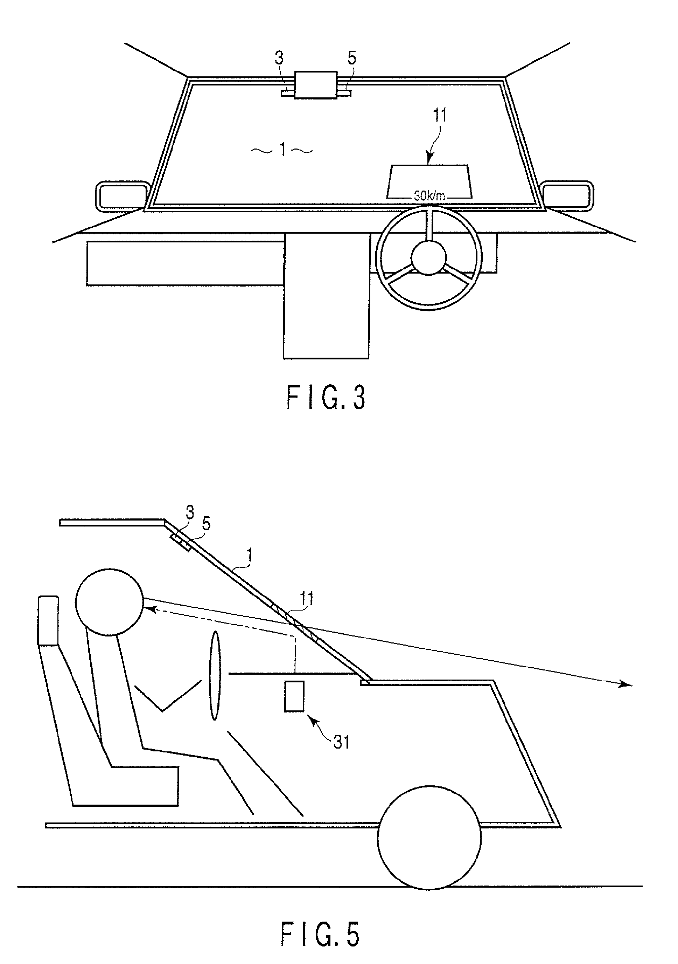

The projection device 31 projects toward the combiner a picture as a display target generated by display information generating module 32, i.e., a traveling speed or various kinds of warning display that should be projected onto the combiner, various kinds of data or map information that are planned to be displayed based on a variety of prepared applications, and others. A mirror control module 41 that controls an angle of a mirror 40 for projection onto the combiner is provided between the combiner and the projection device 31. That is, as shown in FIG. 5, the projection device 31 projects display information onto the combiner 11 on the windshield 1 through the mirror 40. It is to be noted that a basic function and a picture display principle of the HUD 101 are already widely utilized, thereby omitting an explanation thereof. However, in many cases, the projection device 31 is provided at a position outside a field of view of a driver, and display information, i.e., a projected picture exiting the projection device 31 is reflected by the combiner 11 provided on the windshield 1 to be superimposed on a line of sight of a driver as represented by an example shown in FIG. 3.

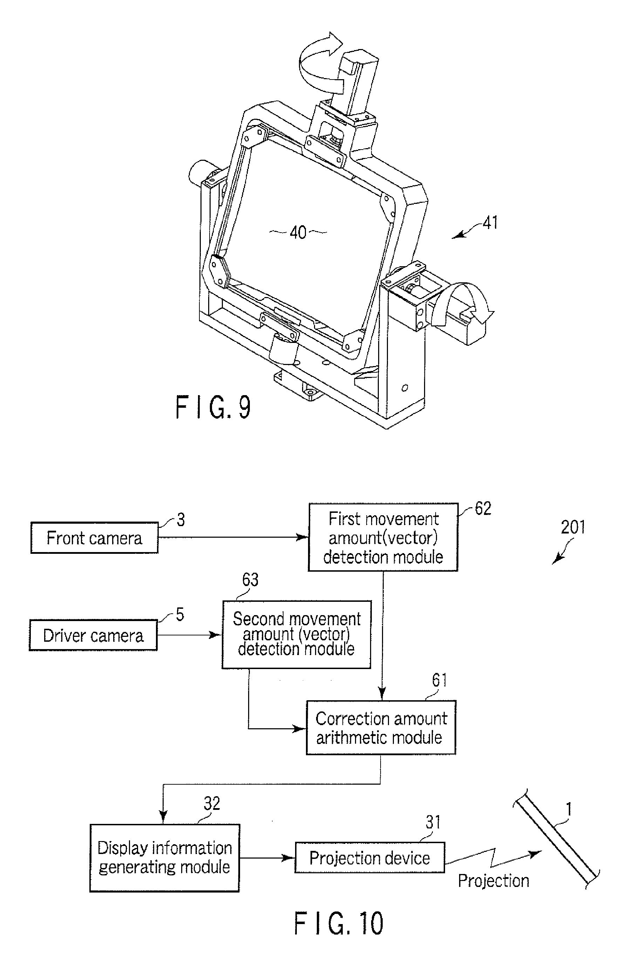

As will be explained later with reference to FIG. 9, the mirror control module 41 includes a non-illustrated mirror motor that holds the mirror 40 and controls inclinations of the mirror 40 in at least two directions, i.e., a horizontal direction and a vertical direction orthogonal to the horizontal direction, and inclinations of the mirror 40 can be arbitrarily set based on arbitrary rotation of the mirror motor. It is to be noted that the non-illustrated mirror motor is independently driven in each of the horizontal direction and the vertical direction by a motor driver module 51.

The motor driver module 51 operates the mirror motor in the mirror control module 41 holding the mirror 40 in accordance with information from a correction amount arithmetic module 61 that sets a projection position of a picture projected in the HUD obtained by a driver camera 5 that acquires information concerning a posture or a line of sight of a driver and a front camera 3 that acquires information concerning vibration or inclinations of a vehicle and a correction amount with respect to deviation from a line of sight of one eye (a single eye) due to vibration of the vehicle or a change in posture of the driver. It is to be noted that a control amount supplied to the mirror control module 41 to correct an operation of the mirror motor, i.e., an angle of the mirror 40 in the correction amount arithmetic module 61 is set by, e.g., a movement amount detection module 62 based on a movement amount (a vector) detected from information (a front picture) acquired from the front camera 3.

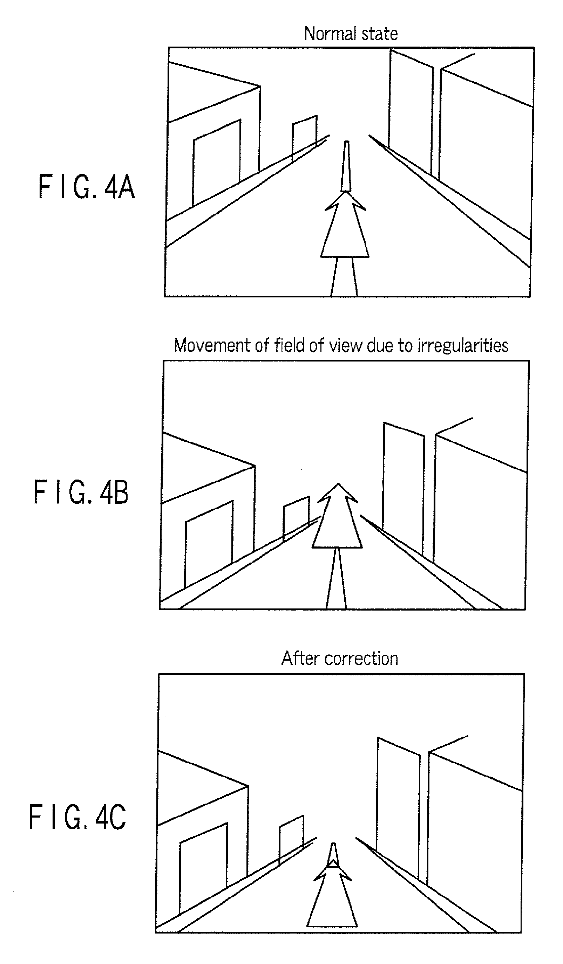

That is, in a situation where "↑" as a picture example projected onto the center of a display image in a regular state as shown in FIG. 4A is visually confirmed as if it is lifted up from the center of the display image as depicted in FIG. 4B, a state that the vehicle is vibrating is detected from background information acquired from the front camera 3, and an angle of the mirror 40 is changed, thereby correcting a position on which the picture is projected (a height in this example) as shown in FIG. 4C.

It is to be noted that the front camera 3 is provided at a non-illustrated predetermined position on a front side of the vehicle called a front grille, e.g., near a cooling air intake unit or a headlight, or a predetermined position on the inner side of the windshield 1 depicted in FIG. 3 or 5. Further, it is needless to say that a vibration/inclination sensor that detects inclinations or vibration of the vehicle may be provided in place of or along with the front camera 3. That is, at the present day, the vibration/inclination sensor is mounted depending on each vehicle, and the front camera 3 can be omitted in such a case.

The combiner 11 is a resin sheet that is appressed against or formed integrally with the windshield 1, and allows a driver to visually confirm a projected picture without regard to a boundary between the combiner 11 and the windshield 1 in a state where the driver visually confirms the front side from the windshield 1. Further, the combiner 11 is provided with a refraction factor that is substantially equal to that of the windshield 1, and can reduce in-vehicle reflection on the windshield 1, diffused reflection of a projected picture and outside light in cooperation with an antireflection film provided on a surface.

FIG. 2 shows another embodiment of the HUD depicted in FIG. 1 that can display a more stable projected picture.

An HUD 201 depicted in FIG. 2 is characterized by further having a driver camera 5 as compared with the HUD shown in FIG. 1. A picture of a driver acquired by the driver camera 5 is detected as a variation (a vector) of a sitting position (a posture) of the driver by a second movement amount detection module 63. It is to be noted that the driver camera 5 is provided at an arbitrary position where a change in posture of the driver can be detected, e.g., near a front camera 3 as shown in FIG. 3, or near a projection device 31, though not shown.

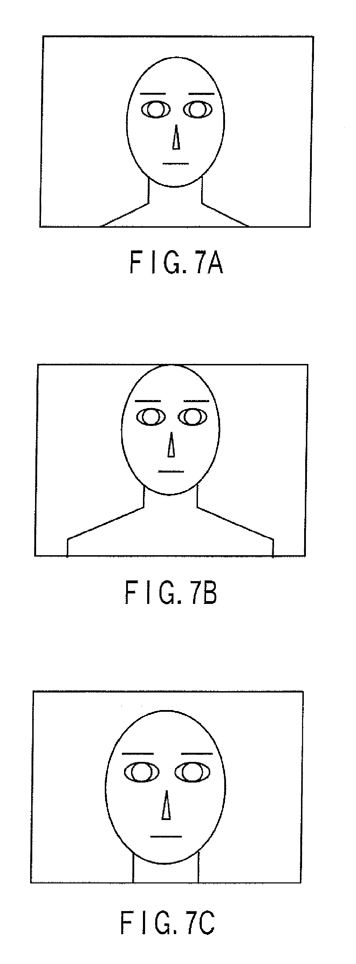

For example, as shown in FIGS. 7A to 7C, the driver camera 5 acquires information of the driver's face, e.g., a distance between both eyes and detects a sitting state of the driver, i.e., a change in posture in a vehicle.

For example, an output from the driver camera 5 shown in FIGS. 7A to 7C can be readily realized by using a "facial recognition technology" already put to practical use in the field of, e.g., a digital still camera or a digital movie (video) camera and "distortion correction" that removes an influence of distortion caused due to a camera position inherent to the driver camera 5 to extract a characteristic point, e.g., a pupil position and taking a change in its coordinate position as a change in sitting position of the driver.

That is, if a state shown in FIG. 7A is a reference position image acquired in a first sitting state, i.e., when the vehicle is not moving, it can be determined that a state depicted in FIG. 7B corresponds to a state where a position of the driver has been changed toward an upper side in the vehicle (due to, e.g., vibration of the vehicle). Furthermore, a state depicted in FIG. 7C represents a state where a position of the driver has moved closer to the windshield due to vibration of the vehicle or an intentional change in posture of the driver. Incidentally, although not shown, when the driver has moved away from the windshield, it is needless to say that this state can be detected based on a reduction in size of a picture of the driver in contrast to the example shown in FIG. 7C.

An example of a method of correcting a position where display information is projected in the HUD depicted in FIG. 2 will now be explained.

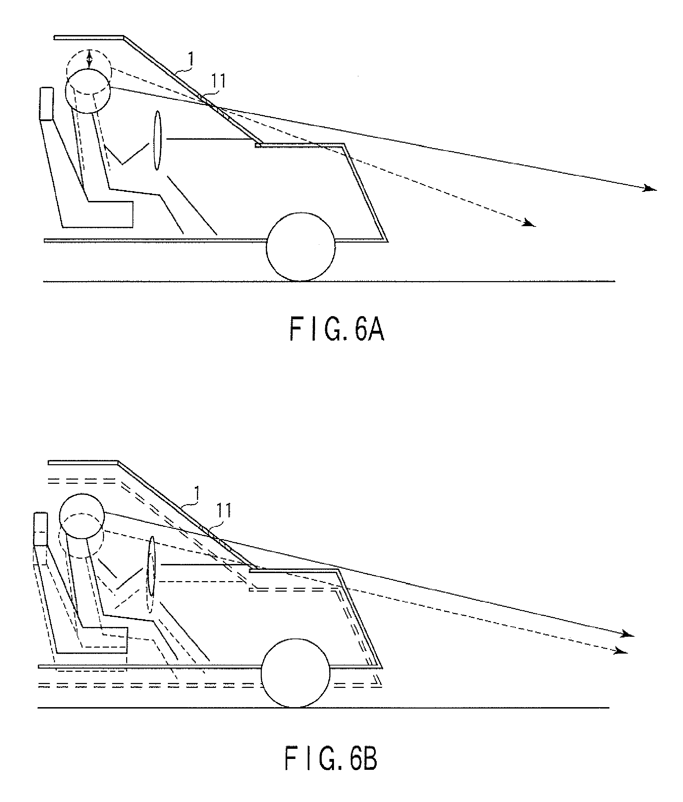

FIG. 6A shows a situation where display information projected onto the combiner 11 cannot be visually confirmed in an intended state when a sitting position of the driver (a posture of the driver) changes. That is, display information (a picture) projected onto the combiner 11 on the windshield 1 by using the HUD is projected on the premise that it is visually confirmed by the driver at an angle indicated by a solid line (which substantially matches with a line of sight of the driver) in FIG. 6A (display information generating module 32 generates a picture optimized for a monocular HUD in advance).

For example, when a relative position of the driver in the vehicle changes to a position indicated by a dotted line in FIG. 6A due to vibration of the vehicle, a picture projected onto the combiner 11 on the windshield 1 is visually confirmed by the driver at an angle (the dotted line) different from the line of sight (the solid line) of the driver.

In this case, the picture optimized for the monocular HUD and projected onto the combiner 11 may be visually confirmed by both eyes, the picture is visually confirmed in a displaced state, or discomfort occurs in perspective.

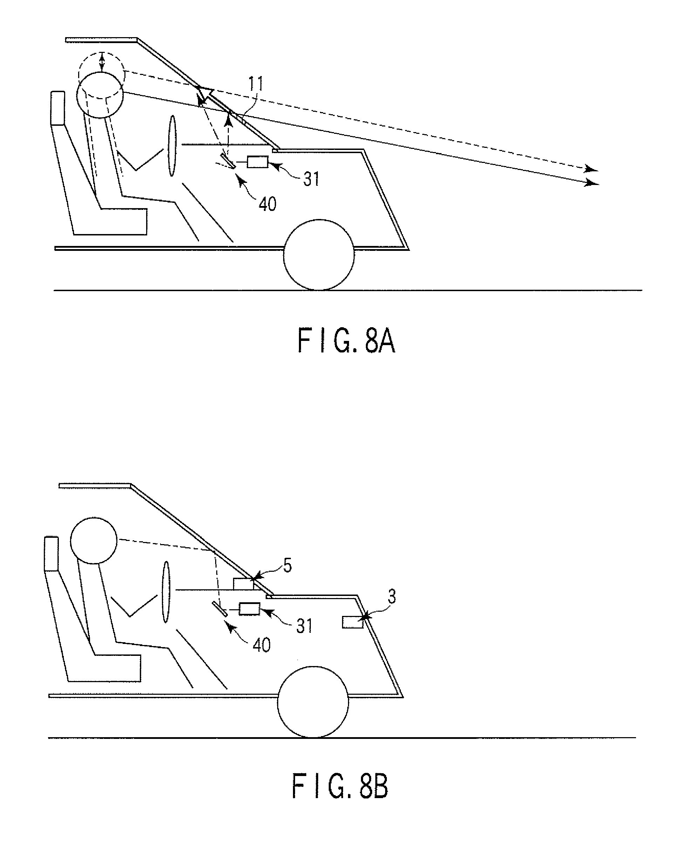

Therefore, as shown in FIG. 8A, a mirror control module 41 changes an angle of a mirror 40 placed between the combiner 11 and the projection device 31 as indicated by the dotted line and a position where the projection picture is projected onto the combiner 11 is corrected in such a manner that the angle of the mirror 40 becomes substantially equal to a line of sight of the driver, thereby suppressing the picture optimized for the monocular HUD from being visually confirmed by both eyes.

It is to be noted that correction of the angle of the mirror 40 can be easily realized by, e.g., converting a pupil position coordinate of the driver obtained from an image acquired by the driver camera 5 (after the "distortion correction") into a rotation angle that should be supplied to a motor in a mirror correction module 41 which will not be explained in detail and supplying the rotation angle to a motor driver module 51 as a pulse number of motor driving pulses based on, e.g., filtering and linear interpolation.

That is, even if the vehicle vibrates due to an influence of, e.g., irregularities of a road surface and a relative position of the driver in the vehicle thereby varies, visual confirmation of a projected image in a displaced state can be reduced. Further, occurrence of discomfort in perspective can be also avoided.

It is to be noted that correction can be prevented from becoming excessive by combining information concerning a position of the driver acquired by the driver camera 5 with information acquired by the front camera 3 when a posture of the driver varies with vibration of the vehicle as shown in FIG. 6B (in the example shown in FIG. 6B, correction is substantially unnecessary).

Further, it is preferable for a frame frequency of an output (an image) from the display image generating module 32 and frame frequencies of the two cameras 3 and 5 to be equal to with each other and synchronized with each other.

FIG. 10 shows an example of an HUD having a display information correction method different from those of the HUDs depicted in FIGS. 1 and 2. It is to be noted that alignment of elements in a vehicle corresponds to the example depicted in FIG. 5.

In an HUD 301 shown in FIG. 10, display information projected onto a combiner 11 by a projection device 31 is **characterized in that** an output (display) position thereof is changed in advance based on information concerning an image acquired by a front camera 3 detected by a movement amount detection module 62 and information concerning a position of a driver detected by a second movement amount detection module 63 at a time point where the display information is generated by display information generating module 32.

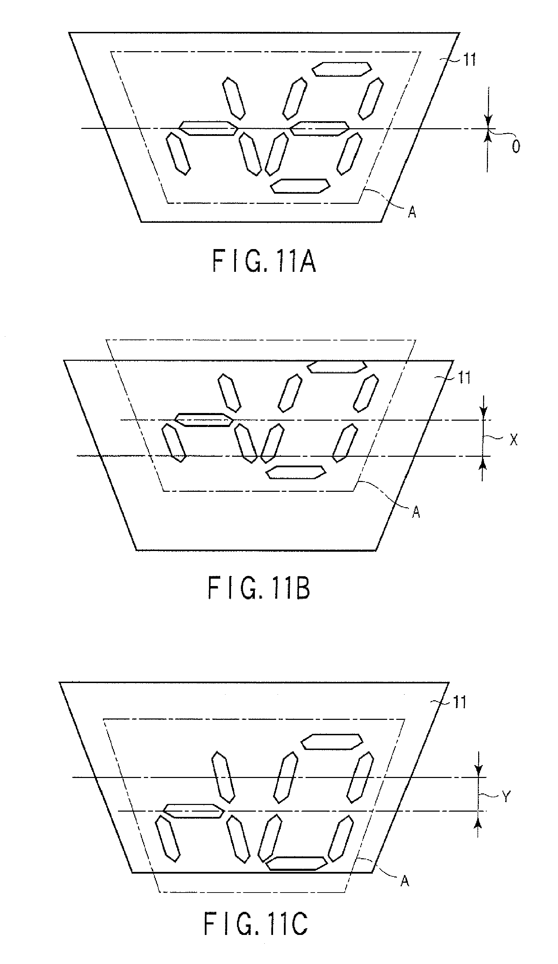

That is, as represented by an example depicted in FIGS. 11A to 11C, when a display image from the display information generating module 32 associated with a regular display position has an offset amount "0" (the center of the image is placed on a central axis O) as shown in FIG. 11A, the HUD that does not require a mirror as a movable unit and a mirror driving mechanism as compared with the HUD depicted in FIG. 1 or 2 can be obtained by displaying this display image in a state where it is shifted by "X" with respect to the central axis O (see FIG. 11B) or a state where it is shifted by "Y (an arbitrary magnitude with a sign opposite to that of X)" with respect to the central axis (see FIG. 11C) based on displacement amounts detected by the movement amount detection module 62 and the second movement amount detection module 63.

Incidentally, it is needless to say that the movement of the mirror explained in the example of the HUD shown in FIG. 1 or 2 can be realized by applying the positional correction of display information depicted to FIGS. 11A to 11C to each of the horizontal direction and the vertical direction.

As explained above, according to one embodiment of the present invention, display information can be stably displayed with respect to an external scene by correcting a position of the display information projected onto the combiner on the windshield in accordance with vibration of a vehicle caused due to, e.g., irregularities on a road surface during traveling and a change in relative position of a driver in the vehicle which may possibly occur in addition to vibration of the vehicle.

As a result, in the automobile head up display (HUD), deviation of a projected image from a line of sight of one eye (a single eye) of the driver can be reduced, and a speed, a vehicle state, or a navigation picture can be displayed in an excellent (easily viewable) display state where the picture is sequentially superimposed on the line of sight of the driver without degrading visibility of the driver, thereby providing the head up display (HUD) that can perform display that does not fatigue a user even in longtime utilization.

It is to be noted that, since display information presupposing projection on a line of sight of one eye alone considering binocular disparity of a driver (a human) is prepared, a tendency of a reduction in visibility or occurrence of discomfort in perspective due to vibration of a vehicle or a change in posture of the driver is reported. However, according to this embodiment, deviation from the line of sight of one eye (a single eye) due to vibration of the vehicle or a change in posture of the driver can be reduced, an alleviation of fatigue of the driver (a reduction in possibility of buildup of fatigue) in longtime utilization be expected in particular.

Moreover, although vibration of the vehicle and a vertical change in posture of the driver have been mainly explained in the detailed description of the invention, it is needless to say that a projected picture can be corrected by the same processing with respect to a lateral direction of an image acquired by each of the front camera and the driver camera.

## Claims

1. A head up display **characterized by** comprising:
a display information generating module (32) which generates information to be projected;
a combiner (11) which guides the information to be displayed that is generated by the display information generating module to a predetermined position;
a detecting module (3) which detects a factor of a fluctuation of a position of a picture that is generated by the display information generating module and projected onto the combiner;
a movement amount detecting module (63) which detects an amount of the fluctuation of the position of the picture projected onto the combiner that is detected by the detecting module; and
a projection position correcting module (61) which changes a position at which the picture from the display information generating module is projected onto the combiner based on the amount of the fluctuation obtained by the movement amount detecting module.

2. The head up display according to claim 1, **characterized by** further comprising:
a second detecting module (63) which detects a factor of a fluctuation of a position of a picture that is generated by the display information generating module and projected onto the combiner with respect to a line of sight of a driver.

3. The head up display according to claim 1, **characterized in that** the detecting module includes a camera that acquires information concerning scenery ahead of a vehicle visually confirmed by a driver.

4. The head up display according to claim 2, **characterized in that** the second detecting module includes a camera that acquires information concerning a change in relative position of the driver and a vehicle.

5. The head up display according to claim 1, **characterized in that** the projection position correcting module includes a mechanism that changes an angle at which the information generated by the display information generating module is projected onto the combiner.

6. The head up display according to claim 5, **characterized in that** the information generated by the display information generating module includes a picture for a single eye that is set to match with a line of sight of one eye of a driver.

7. The head up display according to claim 1, **characterized in that** the projection position correcting module includes a mechanism that changes a display position in the display position generating module for the information generated by the display information generating module.

8. The head up display according to claim 1, **characterized in that** the information generated by the display information generating module includes a picture of a single eye that is set to match with a line of sight of one eye of a driver.

9. The head up display according to claim 7, **characterized in that** the information generated by the display information generating module includes a picture for a single eye that is set to match with a line of sight of one eye of a driver the information generated by the display information generating module includes a picture of a single eye that is set to match with a line of sight of one eye of a driver.

10. A head up display **characterized by** comprising:
a display information generating module (32) which generates projection information;
a combiner (11) which superimposes information to be displayed that is generated by the display information displaying module on a windshield along a line of sight of a driver;
a front camera (3) which captures scenery entering a line of sight of the driver in order to detect vibration of a vehicle; and
a driver camera (5) which captures a change in relative position of the driver and the vehicle.
